# EUROPEAN PATENT SPECIFICATION

(11) **EP 2 692 409 B1**
(45) Date of publication and mention of the grant of the patent: **11.01.2017**
(21) Application number: 12763008.5
(22) Date of filing: 30.01.2012
(51) Int. Cl.: B01D 46/52, B01D 39/20, D04H 1/4218, B01D 46/10, D04H 1/559

(54) **HIGH TEMPERATURE RESISTANT AIR FILTER**
HOCHTEMPERATURBESTÄNDIGER LUFTFILTER
FILTRE À AIR RÉSISTANT À UNE TEMPÉRATURE ÉLEVÉE

(30) Priority: 31.03.2011 JP 2011080915
(43) Date of publication of application: 05.02.2014
(73) Proprietor: Nippon Muki Co., Ltd., Tokyo 110-0015 (JP)
(72) Inventor: HAYASHI, Shiro, Yuki-shi Ibaraki 307-0046 (JP); YAMAGUCHI, Takeki, Yuki-shi Ibaraki 307-0046 (JP)
(74) Representative: Körfer, Thomas
(86) International application number: PCT/JP2012/000555
(87) International publication number: WO 2012/132182

(56) References cited:
- JP-A- 4 029 710
- JP-A- 2004 313 888
- JP-A- 2006 187 686
- JP-A- 2008 212 858
- JP-A- 2008 260 016
- JP-U- 56 062 113
- US-A1- 2002 184 862
- US-A1- 2005 039 427

## Description

### Technical Field

The present invention relates to an air filter for high temperature suitable to be used for cleaning circulating air with high air volume, which is attached to a dryer and so on for drying articles with high-temperature clean air such as a dryer in a tunnel-type drying and sterilizing machine.

### Background Art

In recent years, there is a trend that an air filter for high temperature for cleaning circulating air is attached to a dryer used for pharmaceutical industry, food industry and the like. As such air filter for high temperature, a filter formed by housing and fixing paper mainly made of glass fiber and formed by using an organic binder as a filter medium which is folded in zigzag shape in a frame body has been used.

The air filter for high temperature used for such dryer has a disadvantage in use, that is, when the air heated at high temperature of, for example, 250 to 450°C touches the filter medium, the organic binder in the paper forming the filter medium is carbonized, and carbide on the surface of an outflow side and inside a layer close to the surface generates dust to be scattered every time the dryer is used. As a result of investigating the cause thereof by the present inventors, the following facts have been found. That is, in the case where the dryer is operated for a given period of time each day, the organic binder is carbonized by the repeated use, and the organic binder exists inside the filter medium as the carbide. In starting operation and stopping operation of the dryer, room temperature air is increased in temperature at the time of starting operation, and the temperature of high temperature air is decreased to room temperature at the time of stopping operation. Accordingly, paper forming the filter medium is expanded and contracted, and such motion of the paper makes the carbide particularly on the surface of the outflow side and in the layer of a slightly deeper outflow side move easily, and the carbide is carried by the airflow passing through the filter medium, which leads to a phenomenon of so-called dust generation and scattering. The carbonization of the organic binder also causes deterioration of coupling between glass fibers and deterioration of filter function at the same time. Additionally, the filter medium is expanded and contracted in upper and lower directions with the change of ambient temperature during use, therefore, an airtight state between upper and lower edge portions of the filter medium and upper and lower frame bodies housing and fixing the filter medium is not maintained by the expansion and contraction.

In order to solve the above problems, the present inventors have proposed, in Patent Document 1, an air filter for high temperature in which there is no dust generation and scattering by the carbide even when the dryer is repeatedly used as well as stable use for a long period of time can be realized, which is formed by housing and fixing a zigzag shaped filter body including a filter medium made of a formed sheet of binder-free glass fiber and heat resistant mesh bodies sandwiching the filter medium from both side surfaces into a frame body with a heat resistant sealing material interposed between upper and lower edge portions of the filter body and the frame body for maintaining airtightness between the filter body and the frame body. In the air filter for high temperature, a pair of comb-shaped holding plates sandwiching the filter body horizontally from airflow upstream/downstream sides are provided at each upper/lower edge portion of the filter body as well as plural bar spacers in which corrugated base rods with projections for space protection are formed in straight base rods for sandwiching the filter body horizontally from airflow upstream/downstream sides are provided at intervals between upper and lower comb-shaped holding plates, thereby maintaining the shape of the filter body.

### Citation List

### Patent Literature

PTL 1 JP-A-2008-260016

### Summary of Invention

### Technical Problem

The air filter for high temperature used for the dryer and so on in the tunnel-type drying and sterilizing machine has been used at 10 CMM in the past. The air filter which can be used with high air volume is required as a great deal of sterilization processing can be performed for a short period of time by using the filter with high air volume, however, a pressure drop due to filter-medium resistance or filter medium deformation becomes too high at the time of processing with high air volume in the air filter for high temperature of Patent Document 1, in which a filter medium area is less than 50 m²/m³, therefore, there are problems that ability of a blower is insufficient or a blower with a larger capacity have to be used. Solution to Problem

As a result of keen examination for solving the above problems, the present inventors have found that the problems can be solved by holding the filter body by the comb-shaped spacer plates sandwiching the filter body horizontally from airflow upstream/downstream sides at specific intervals not only at the upper and lower end portions of the filter body but also over the entire filter body in upper and lower directions to thereby form independent closed spaces between these comb-shaped spacer plates as well as between the comb-shaped holding plate and the comb-shaped spacer plate.

In view of the above knowledge, there is provided an air filter for high temperature according to claim 1.

In the air filter for high temperature according to claim 2, the glass fiber may comprise glass fiber having an average fiber diameter of 0.6 to 0.8 µm in the air filter for high temperature according to claim 1.

Also in the air filter for high temperature according to claim 3, the filter medium may be formed by a formed sheet having a thickness of 7.5 to 10.5 mm and a weight of 75 to 84 g/m² in the air filter for high temperature according to claim 1 or 2.

Also in the air filter for high temperature according to claim 4, the filter medium may be formed by stacking plural formed sheets in the air filter for high temperature according to any one of claims 1 to 3.

### Advantageous Effects of Invention

The air filter for high temperature according to the present invention is formed by housing and fixing a zigzag shaped filter body including a filter medium made of a formed sheet of binder-free glass fiber and heat resistant mesh bodies sandwiching the filter medium from both side surfaces into a frame body with a heat resistant sealing material interposed between upper and lower edge portions of the filter body and the frame body for maintaining airtightness between the filter body and the frame body with a filter medium area of 50 to 65 m²/m³ per a unit filter capacity, in which a pair of comb-shaped holding plates sandwiching the filter body horizontally from airflow upstream/downstream sides at each upper/lower edge portion of the filter body and plural pairs of comb-shaped spacer plates sandwiching the filter body horizontally from airflow upstream/downstream sides between the upper and lower comb-shaped holding plates at intervals of 90 to 120 mm are included, thereby providing the air filter for high temperature with high air volume of 30 CMM per 610 × 610 mm with a pressure drop of 360 Pa or less.

That is, the air filter for high temperature according to the present invention uses the formed sheet made of only binder-free glass fiber as the filter medium, therefore, high-temperature air can be circulated without generating dust even when using the filter by allowing high-temperature air of 400 to 500°C in the maximum use temperature to pass through. The formed sheet is not weakened by wind pressure due to the softening of the glass fiber and the increase in pressure drop due to density unevenness caused by the weakening of the glass fiber does not occur, which enables use for a long period of time.

Moreover, as the filter medium made of the formed sheet is sandwiched by the heat resistant mesh bodies from both side surfaces to be the zigzag shaped filter body, the filter medium can be held stably for a long period of time, and a good high-temperature filter function can be obtained for a long period of time.

Furthermore, a pair of comb-shaped holding plates sandwiching the filter body horizontally from airflow upstream/downstream sides is provided at each upper/lower edge portion of the filter body, the heat resistant sealing material is sandwiched by the frame body and the comb-shaped holding plates, and the filter body is housed and fixed into the frame body with airtightness in a state where the heat resistant sealing material is interposed between the upper and lower edge portions of the filter body. Therefore, even when the filter medium is expanded and contracted in upper and lower directions with the change in ambient temperature at the time of using the high-temperature air filter, the heat resistant sealing material absorbs the expansion/contraction of the filter medium and maintains the airtightness between the upper and lower edge portions of the filter body and the frame body, and thus, good sealing property can be held for a long period of time due to a buffering effect by the heat resistant sealing material interposed between the filter body and the frame body, therefore, stable filter performance can be maintained for a long period of time without causing a problem of leakage.

Additionally, the plural pairs of comb-shaped spacer plates sandwiching the filter body horizontally from airflow upstream/downstream sides between the upper and lower comb-shaped holding plates at intervals of 90 to 120 mm. Therefore, independent closed spaces can be formed between these comb-shaped spacer plates as well as between the comb-shaped holding plate and the comb-shaped spacer plate while holding the shape of the filter body by these comb-shaped spacer plates, and the laminar flow can be formed inside respective closed spaces, as a result, deformation in the shape of the filter body can be positively prevented even in the high air volume.

### Brief Description of Drawings

[Fig. 1] Fig. 1 is a front elevational view of an air filter for high temperature according to a manufacturing method of the present invention.
[Fig. 2] Fig. 2 is a plan view including a partially-ruptured cross section of the air filter for high temperature of Fig. 1.
[Fig. 3] Fig. 3 is a partial longitudinal sectional view of the air filter for high temperature of Fig. 1.

### Description of Embodiment

Hereinafter, an embodiment of an air filter for high temperature according to the present invention will be explained.

The air filter for high temperature according to the present invention is formed by housing and fixing a zigzag shaped filter body including a filter medium made of a formed sheet of binder-free glass fiber and heat resistant mesh bodies sandwiching the filter medium from both side surfaces into a frame body with a heat resistant sealing material interposed between upper and lower edge portions of the filter body and the frame body for maintaining airtightness between the filter body and the frame body with a filter medium area of 50 to 65 m²/m³ per a unit filter capacity, in which a pair of comb-shaped holding plates sandwiching the filter body horizontally from airflow upstream/downstream sides is provided at each upper/lower edge portion of the filter body as well as plural pairs of comb-shaped spacer plates sandwiching the filter body horizontally from airflow upstream/downstream sides are provided between the upper and lower comb-shaped holding plates at intervals of 90 to 120 mm.

As the filter medium of the filter body, a filter medium made of a formed sheet of binder-free glass fiber is used. As the filter medium made of the formed sheet, a filter medium using E-glass (non-alkali glass, a softening point of 750 to 1100°C) fiber can be used as a medium specified to 500°C, and a filter medium using C-glass (alkali glass, a softening point of 600 to 750°C) fiber can be used as a medium specified to 400°C. The glass fiber preferably has a softening point of 600 to 1100°C. This is because, when the softening point of the glass fiber is less than 600°C, there is a problem that the density of the filter medium is increased and a pressure drop becomes high as the heat resistance is insufficient, and thus, the wind pressure is received in a state where the filter medium is softened at high temperature. When the softening point exceeds 1100°C, there is also problem that it is difficult to form the formed sheet as it is difficult to form short fiber by a flame method and so on. It is also preferable to use short fibers such as C-glass, E-glass and S-glass as the glass fiber. The formed sheet is not weakened by wind pressure due to the softening of the glass fiber forming the formed sheet even when used as the filter medium of the air filter for high temperature in a dryer used at a high temperature of 400 to 500°C, as the result, occurrence of density unevenness caused by the weakening of the glass fiber can be prevented.

The formed sheet is preferably formed by forming short glass fiber formed from a glass melting furnace by using the flame method, a centrifugal method and the like into a sheet form so that the density distribution becomes uniform in a width direction and a flow direction by a cotton gathering machine. That is, in related art, after the glass fiber is formed into felt by the cotton gathering machine, glass fiber cotton formed into felt in an unshaped state without maintaining the sheet form is made to be the sheet-shaped filter medium by hand, therefore, density unevenness occurs. However, it is preferable that the glass fiber is formed in the sheet form so that the density distribution becomes uniform in the width direction as well as the flow direction by the cotton gathering machine as described above, and the sheet is used as the filter medium having uniform density distribution both in the width direction and the flow direction while maintaining the shape of the formed sheet. For example, it is more preferable that the formed sheet formed in the sheet form so that the density distribution becomes uniform in the width direction and the flow direction by the cotton gathering machine is once taken up in a roll, then, the roll-state formed sheet which has been taken up is unrolled again to the sheet form to be used as the filter medium.

The filter medium used for the air filter for high temperature preferably has a weight of 75 to 84 g/m². When the weight of the filter medium is less than 75 g/m², handleability is inferior at the time of assembly in the case where the filter medium is sandwiched by heat resistant mesh bodies to form the filter body, which causes a problem that desired efficiency of 90% or more (at 0.2 to 0.5 µm) is difficult to obtain. On the other hand, when the weight exceeds 84 g/m², the pressure drop is high and 360 Pa or less is difficult to obtain at a filter medium face velocity of 8 m/s, and further, the filter medium is voluminous and inferior in assemblability.

The filter medium is preferably 7.5 to 10.5 mm in thickness. When the thickness of the filter medium is less than 7.5 mm, handleability is inferior at the time of assembly in the case where the filter medium is sandwiched by heat resistant mesh bodies to form the filter body, which causes a problem that desired efficiency of 90% or more (at 0.2 to 0.5 µm) is difficult to obtain. On the other hand, when the thickness of the filter medium exceeds 10.5 mm, the pressure drop is high and it is difficult to obtain the pressure of 360 Pa or less at the filter medium face velocity of 8 m/s, and further, the filter medium is voluminous and inferior in assemblability.

The thickness of the filter medium in the case of using plural filter media in a stacked manner as described later is preferably set to a range of 7.5 to 10.5 mm in thickness after stacking filter media.

As the filter medium used for the air filter for high temperature, plural pieces of, preferably, three pieces of formed sheets with a low weight are stacked to be used as the filter medium for eliminating minute density unevenness inevitably occurring in the formed sheet, even when using the formed sheet formed in the sheet form so that the density distribution becomes uniform both in the width direction and the flow direction by the cotton gathering machine. This is because inevitable density unevenness of the formed sheet in the entire filter medium is eliminated and variation in density of the filter medium is reduced to thereby improve uniformity in collecting efficiency by stacking plural formed sheets to be used as the filter medium. In this case, the formed sheet having a weight of 25 to 28 g/m² is preferably used. When the weight is less than 25 g/m², there is a problem that handleability of the formed sheet is inferior at the time of assembling the filter body. On the other hand, when the weight exceeds 28 g/m², the weight will exceed 84 g/m² when plural formed sheets are stacked, which causes problems that the pressure drop becomes high and assemblability is inferior as the filter medium becomes voluminous.

The formed sheet can be suitably fabricated as the filter medium for the air filter for high temperature with desired collecting efficiency and the pressure drop by appropriately selecting an average fiber diameter of glass fiber included in the formed sheet, the weight at the time of using the formed sheet as the filter medium and so on.

For example, the glass fiber included in the formed sheet used for the air filter with the collecting efficiency of 90% (at 0.2 to 0.5 µm) or more is preferably short glass fiber with the average fiber diameter of 0.6 to 0.8 µm. That is because, when the average fiber diameter of the glass fiber is less than 0.6 µm, it is difficult to be fiber or a sheet, and when the average fiber diameter exceeds 0.8 µm, it becomes difficult to obtain desired collecting efficiency by the filter medium formed by using the formed sheet formed from the glass fiber.

It is preferable that the heat resistant mesh bodies are formed by using metal such as stainless steel, heat-resistant synthetic resin and so on which can resist heat of the dryer. In the heat resistant mesh bodies, it is desirable that the pressure drop is as low as possible as well as it is desirable that meshes are fine to a degree in which the filter medium made of the glass fiber formed sheet can be positively held.

It is also preferable that the mesh body on the inflow side is coarsely formed by thick wires and the mesh body on the outflow side is closely formed by thin wires such that, for example, the inflow side is formed by 36 × 40 wire mesh with a mesh wire diameter of 0.193 mm and the outflow side is formed by 38 × 60 wire mesh with a mesh wire diameter of 0.1524 mm.

As it is sufficient that the comb-shaped holding plates can sandwich the filter body horizontally from airflow upstream/downstream sides at respective upper and lower edge portions of the filter body, it is preferable that the shape of the comb corresponds to the zigzag shape of the filter medium and that the plates are made of heat-resistant materials including metal plates such as a stainless steel plate, a synthetic resin plate and so on in consideration of heat resistance.

As it is sufficient that the comb-shaped spacer plates sandwich the filter body horizontally from airflow upstream/downstream sides between the upper and lower comb-shaped holding plates at intervals, it is preferable that the shape of the comb corresponds to the zigzag shape of the filter medium in the same manner as the shape of the comb of the comb-shaped holding plates and that the plates are made of heat-resistant materials including metal plates such as a stainless steel plate, a heat-resistant synthetic resin plate and so on in consideration of heat resistance.

The comb-shaped spacer plates may be formed to be the same shape as the comb-shaped holding plates.

It is necessary to set an interval between the comb-shaped spacer plates and an interval between the comb-shaped holding plate and the comb-shaped spacer plate are set to 90 to 120 mm. This is because, when the interval is less than 90 mm, a gap between the comb-shaped holding plate and the comb-shaped holding plate becomes large, therefore, an airtight (isolation) effect forming independent closed spaces between the comb-shaped holding plate and the comb-shaped holding plate is lost, which deteriorates the pressure drop due to deformation of the filter body being pressed by wind pressure at the time of use. And when the interval exceeds 120 mm, the airtight (isolation) effect forming the independent closed spaces between the comb-shaped holding plate and the comb-shaped holding plate becomes too high, which deteriorates the pressure drop due to restriction of airflow.

Additionally, the frame body forming the air filter for high temperature according to the present invention is preferably formed by using heat resistant materials including metal plates such as stainless steel, the synthetic resin plate and so on which can resist ambient temperature of the dryer for which the air filter for high temperature is used.

Next, the air filter for high temperature according to the present invention will be explained with reference to the drawings.

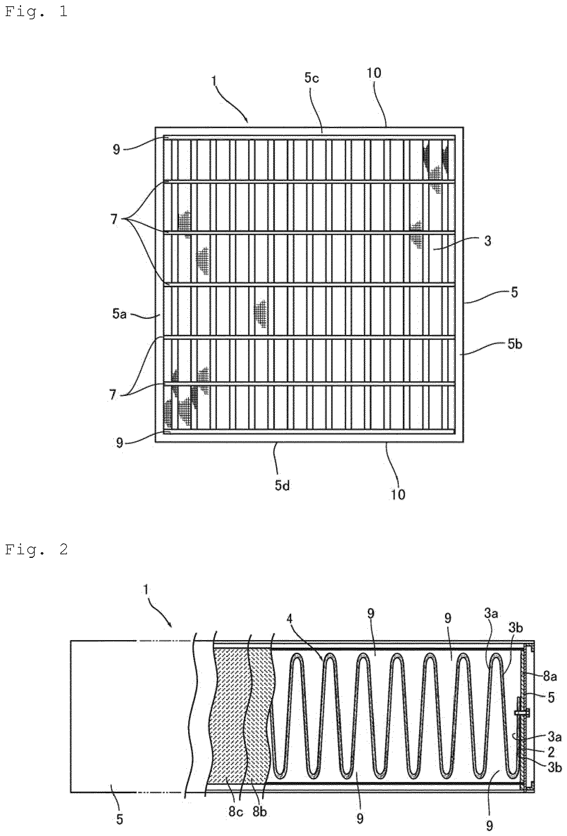

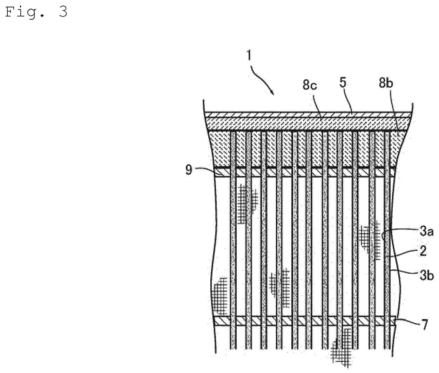

As shown in Fig. 1 to Fig. 3, an air filter for high temperature 1 according to the present invention has a structure of housing and fixing a filter body 4 in zigzag shape including a filter medium 2 made of a formed sheet of binder-free glass fiber and heat resistant mesh bodies 3a and 3b sandwiching the filter medium 2 from both side surfaces into a frame body 5 (5a, 5b, 5c and 5d) with heat resistant sealing materials 8a, 8b and 8c interposed therebetween for maintaining airtightness with respect to the frame body 5.

The zigzag-shaped filter body 4 is fixed between both-side frame bodies 5a and 5a in a state where zigzag-shaped intervals of the filter body 4 are stably held by inserting pairs of comb-shaped spacer plates 7 inserted into a zigzag-shaped space of the filter body 3 and abutting on front and rear surfaces of the filter body 3, namely, airflow upstream/downstream side surfaces, horizontally from the front and rear of the filter body 4, namely, the airflow upstream/downstream sides, in which five pairs of comb-shaped spacer plates 7 are inserted at fixed intervals in upper and lower directions.

The filter body 4 is fixed to the both-side frame bodies 5a and 5b in an airtight state by a not-shown bolt with the heat resistant sealing material 8a between the filter body 4 and the both side frame bodies 5a and 5b. A means for fixing the filter body 4 to the both side frame bodies 5a and 5b through the heat resistant sealing material 8a is not limited to the bolt, and the filter body 4 can be fixed by other fixing means.

In the vicinity of upper and lower edge portions of the filter body 4, each pair of comb-shaped holding plates 9 inserted into a zigzag-shaped space of the filter body 4 and abutting on front and rear faces of the filter body 4, namely, airflow upstream/downstream side faces is horizontally inserted from the front and back of the filter body 4, namely, from the airflow upstream/downstream sides. As the comb-shaped holding plates 9 are inserted, the felt-state heat resistant sealing material 8b can be packed into space areas from respective comb-shaped holding plates 9 to the upper and lower edge portions of the filter body 4 as well as the heat resistant sealing material 8c formed by stacking plural formed sheets made of the same glass fiber as the filter medium 2 is interposed between the packed heat resistant sealing material 8b and the upper and lower frame bodies 5c and 5d, the whole of the heat resistant sealing materials 8b and 8c is sandwiched and pressed by the comb-shaped holding plates 9, 9 and the upper and lower frame bodies 5c and 5d, and the upper and lower edge portions of the filter body 4 are fixed with pressure to the upper and lower frame bodies 5b and 5b in the state where the heat resistant sealing materials 8b and 8c are interposed, thereby housing and fixing the filter body 4 into the frame body 5 in a state where the airtightness between the filter body 4 and the upper and lower frame bodies 5c and 5d is maintained by a buffering effect obtained by the heat resistant sealing materials 8b and 8c. Accordingly, even when the filter medium 2 is expanded and contracted in the upper and lower directions at high temperature use, the heat resistant sealing materials 8b and 8c interposed between the comb-shaped holding plates 9 and the upper and lower frame bodies 5c and 5d absorb the expansion/contraction of the filter medium 2 and maintain the airtightness between the upper and lower edge portions of the filter body 4 and the upper and lower frame bodies 5c and 5d, thereby holding good sealing property of the air filter for high temperature 1.

As the heat resistant sealing materials 8a and 8c, a formed sheet with a weight of 25 g/m² made of C-glass (alkali glass) fiber having an average fiber diameter of 0.8 µm is used.

As the heat resistant sealing material 8b, the felt-state C-glass (alkali glass) fiber cotton having an average fiber diameter of 0.8 µm is used.

Though the same heat-resistant material as the filter material 2 can be used as the heat-resistant materials 8a, 8b and 8c, a lump of felt-state glass cotton can be mainly used as the heat-resistant sealing material as well as the same formed sheet as the filter medium 2 can be used by being cut so as to be packed or being stacked, not limited to the case where the lump of felt-state glass cotton and the same formed sheet as the filter medium 2 are both used.

Additionally, as the frame body 5 (5a, 5a, 5b and 5b), metal such as stainless steel, synthetic resin and so on which can resist ambient temperature of the dryer using the air filter for high temperature can be used.

### Examples

Next, a specific example of a method of manufacturing the air filter for high temperature according to the present invention will be explained with comparative examples, however, the present invention is not limited to these examples.

### (Example 1)

As the air filter for high temperature according to the example, which has a structure shown in Fig. 1 to Fig. 3, only C-glass (alkali glass) fiber having an average fiber diameter of 0.6 µm formed by the flame method were formed into a sheet shape with a weight of 25 g/m² as the filter medium without using a binder by a cotton gathering machine, and three formed sheets are stacked to have a weight of 75 g/m² were used. A zigzag-shaped filter body with a filter medium area 53.6 m²/m³ per a unit filter capacity (a mountain-folded filter area 5.6 m²/filter) was formed by using heat resistant mesh bodies sandwiching the filter medium from both side surfaces in a zigzag manner, in which the inflow side was formed by 36 × 40 wire mesh with a mesh wire diameter of 0.193 mm and the outflow side was formed by 38 × 60 wire mesh made of stainless steel with a mesh wire diameter of 0.1524 mm. Additionally, as the heat resistant sealing materials, felt-state glass fiber cotton made of C-glass fiber having an average fiber diameter of 0.6 µm and a formed sheet made of C-glass fiber having the average fiber diameter of 0.6 µm with a weight of 20 g/filter (610 × 290 mm at upper and lower places) were used. Moreover, the heat resistant sealing material as a formed sheet made of C-glass (alkali glass) fiber having an average fiber diameter of 0.8 µm with a weight of 25 g/m² was used for right and left side frame bodies.

The comb-shaped holding plates were provided at both upper and lower edge portions of the filter body as shown in the drawing.

The five pairs of comb-shaped spacer plates with five plates on each side provided at intervals of approximately 100 mm sandwich and fix the filter body.

The frame bodies, the comb-shaped holding plates and the comb-shaped spacer plates included in the air filter for high temperature made of stainless steel were used.

### (Comparative Example 1)

An air filter for high temperature according to a comparative example 1 was obtained in the same manner as Example 1 except that three pairs of heat resistant spacers with three spacers on each side in which corrugated base rods with projections for space protection for stably holding the zigzag-shaped intervals of the filter body were fixed to straight base rods fixed so as to horizontally cross the filter as described in Patent Document 1 were provided at intervals of approximately 150 mm to sandwich and fix the filter body instead of providing the above five pairs of comb-shaped spacer plates.

### (Comparative Example 2)

An air filter for high temperature according to a comparative example 2 was obtained in the same manner as Example 1 except that five pairs of heat resistant spacers with five spacers on each side in which corrugated base rods with projections for space protection for stably holding the zigzag-shaped intervals of the filter body were fixed to straight base rods fixed so as to horizontally cross the filter as described in Patent Document 1 were provided at intervals of approximately 100 mm to sandwich and fix the filter body instead of providing the above five pairs of comb-shaped spacer plates.

### (Comparative Example 3)

An air filter for high temperature according to a comparative example 3 was obtained in the same manner as Example 1 except that three pairs of comb-shaped spacer plates with three plates on each side were provided at intervals of approximately 150 mm to sandwich and fix the filter body instead of providing the above five pairs of comb-shaped spacer plates.

Next, the air filters for high temperature having a size of 610 × 610 × 290 mm in Example 1 and Comparative Examples 1, 2 and 3 obtained as the above were ventilated at 400°C and baked for an hour, then, the pressure drop was measured in a room temperature after a heat cycle test of 10-cycles in which one cycle was performed at 400°C for an hour to evaluate heat resistance performance of the air filter for high temperature. The results are shown in Table 1.

The pressure drop was measured in the following manner.

### [Pressure Drop]

Passage resistances obtained when allowing air to pass through respective air filters for high temperature at the filter medium face velocity 8 m/s were measured by a manometer.

Judgment standard: when values of the pressure drop obtained after the heat cycle test were 360 Pa or less, these are represented by "O", and when values exceeds 360 Pa, these are represented by "X".

**[Table 1]**

| | Filter medium weight (number of layers) | Filter medium area (number of folds) | Filter medium area per unit filter capacity | Comb-shaped spacer plate | Pressure drop measurement after heat cycle test (after ventilation) | Overall judgment |
|---|---|---|---|---|---|---|
| | g/m² | m²/filter | m²/m³ | - | Pa | - |
| Example 1 | 75 (3) | 5.6 (19) | 51.9 | 5 punched plate | ○ 360 | ○ |
| Comparative example 1 | 75 (3) | 5.6 (19) | 51.9 | 3 bar shape | × 850 | × |
| Comparative example 2 | 75 (3) | 5.6 (19) | 51.9 | 5 bar shape | × 400 | × |
| Comparative example 3 | 75 (3) | 5.6 (19) | 51.9 | 3 punched plate | × 800 | × |

The following can be found from the results shown in Table 1.

In Example 1, the filter body was sandwiched and fixed by five pairs of comb-shaped holding plates with five plates on each side as well as the comb-shaped holding plates were arranged at intervals of approximately 100 mm to thereby form the independent closed spaces between the comb-shaped holding plate and the comb-shaped holding plate to make an airtight (isolation) structure, and the laminar flow can be formed inside these respective spaces, thereby positively preventing deformation in the shape of the filter body when used with high air volume, as a result, an excellent result in the pressure drop which was 360 Pa after the heat cycle test (after ventilation) was obtained.

In the comparative example 1, the filter body was sandwiched merely by three pairs of heat resistant spacers with three spacers on each side and fixed at intervals of approximately 150 mm. As there was not the airtight (isolation) structure as in Example 1, the worst result in the pressure drop which is 850 Pa after the heat cycle test (after ventilation) was obtained due to the problem of deterioration in the pressure drop due to deformation of the filter body being pressed by wind pressure at the time of use.

In the comparative example 2, the filter body was sandwiched merely by five pairs of heat resistant spacers with five spacers on each side and fixed at intervals of approximately 100 mm. As there was not the airtight (isolation) structure as in Example 1, a worse result in the pressure drop which is 600 Pa after the heat cycle test (after ventilation) was obtained though the problem of deterioration in the pressure drop due to deformation of the filter body being pressed by wind pressure at the time of use has been slightly improved.

In the comparative example 3, the filter body was sandwiched and fixed by three pairs of comb-shaped holding plates with three plates on each side as well as the comb-shaped holding plates were arranged at intervals of approximately 150 mm to thereby form the independent closed spaces between the comb-shaped holding plate and the comb-shaped holding plate to make the airtight (isolation) structure, however, the effect of the airtight (isolation) structure is reduced as compared with Example 1, as a result, a worse result in the pressure drop which is 800 Pa after the heat cycle test (after ventilation) was obtained.

### [Reference Signs List]

- 1: air filter for high temperature
- 2: filter medium
- 3a: heat resistant mesh body
- 3b: heat resistant mesh body
- 4: filter body
- 5: frame body
- 5a: side frame body
- 5b: side frame body
- 5c: upper frame body
- 5d: lower frame body
- 7: comb-shaped spacer plate
- 8a: heat resistant sealing material
- 8b: heat resistant sealing material
- 8c: heat resistant sealing material
- 9: comb-shaped holding plate

## Claims

1. An air filter for high temperature (1) which is formed by housing and fixing a zigzag shaped filter body (4) including a filter medium (2) made of a formed sheet (3a, 3b) of binder-free glass fiber and heat resistant mesh bodies sandwiching the filter medium (2) from both side surfaces into a frame body (5) with a heat resistant sealing material (8a, 8b, 8c) interposed between upper and lower edge portions of the filter body (4) and the frame body (5) for maintaining airtightness between the filter body (4) and the frame body (5) with a filter medium area of 50 to 65 m²/m³ per a unit filter capacity, the air filter for high temperature (1) comprising:
a pair of comb-shaped holding plates (9) sandwiching the filter body (4) horizontally from airflow upstream/downstream sides at each upper/lower edge portion of the filter body (4),
**characterized in that**
plural pairs of comb-shaped spacer plates (7) are sandwiching the filter body (4) horizontally from airflow upstream/downstream sides between the upper and lower comb-shaped holding plates (9) at intervals of 90 to 120 mm, and
independent closed spaces are formed between the comb-shaped spacer plates (7) as well as between the comb-shaped holding plate (9) and the comb-shaped spacer plate (7).

2. The air filter for high temperature (1) according to claim 1,
wherein the glass fiber comprises glass fiber having an average fiber diameter of 0.6 to 0.8 µm.

3. The air filter for high temperature (1) according to claim 1 or 2,
wherein the filter medium (2) is formed by a formed sheet having a thickness of 7.5 to 10.5 mm and a weight of 75 to 84 g/m².

4. The air filter for high temperature (1) according to any of claims 1 to 3,
wherein the filter medium (2) is formed by stacking plural formed sheets.

## Patentansprüche

1. Luftfilter (1) für hohe Temperatur, der durch Unterbringen und Fixieren eines zickzackförmigen Filterkörpers (4) gebildet ist, welcher ein Filtermedium (2) enthält, das aus einem geformten Blatt (3a, 3b) aus bindemittelfreier Glasfaser und hitzebeständigen Netzkörpern besteht, die das Filtermedium (2) von beiden Seitenflächen in einen Rahmenkörper (5) mit einem hitzebeständigen Dichtungsmaterial (8a, 8b, 8c) zusammenschichten, das zwischen oberen und unteren Randbereichen des Filterkörpers (4) und dem Rahmenkörper (5) eingefügt ist, um Luftdichtheit zwischen dem Filterkörper (4) und dem Rahmenkörper (5) bei einer Filtermediumfläche von 50 bis 65 m²/m³ pro einer Einheitsfilterkapazität aufrechtzuerhalten,
wobei der Luftfilter (1) für hohe Temperatur umfasst:
ein Paar kammförmiger Halteplatten (9), die den Filterkörper (4) horizontal von Luftströmungs-Zuführungsseiten/-Abführungsseiten an jedem oberen/unteren Randbereich des Filterkörpers (4) zusammenschichten,
**dadurch gekennzeichnet,**
**dass** eine Vielzahl von kamnförmigen Abstandsplatten (7) den Filterkörper (4) von Luftströmungs-Zuführungsseiten/-Abführungsseiten zwischen den oberen und unteren kammförmiger Halteplatten (9) in Intervallen von 90 bis 120mm horizontal zusammenschichten
und **dass** zwischen den kammförmigen Abstandsplatten (7) sowie zwischen der kammförmigen Halteplatte (9) und der kammförmigen Abstandsplatte (7) unabhängige geschlossene Räume gebildet sind.

2. Luftfilter (1) für hohe Temperatur nach Anspruch 1, wobei die Glasfaser eine Glasfaser mit einem mittleren Faserdurchmesser von 0,6 bis 0,8µm umfasst.

3. Luftfilter (1) für hohe Temperatur nach Anspruch 1 oder 2, wobei das Filtermedium (2) durch Bilden eines geformten Blattes mit einer Dicke von 7,5 bis 10,5mm und einem Gewicht von 75 bis 84g/m² gebildet ist.

4. Luftfilter (1) für hohe Temperatur nach einem der Ansprüche 1 bis 3,
wobei das Filtermedium (2) durch Stapeln einer Vielzahl geformter Blätter gebildet ist.

## Revendications

1. Filtre à air pour haute température (1) qui est formé en logeant et en fixant un corps de filtre en forme de zigzag (4) comprenant un milieu filtrant (2) réalisé avec une feuille formée (3a, 3b) de fibres de verre dépourvues de liant et des corps en maille résistant à la chaleur prenant en sandwich le milieu filtrant (2) à partir des deux surfaces latérales dans un corps de bâti (5) avec un matériau d'étanchéité résistance à la chaleur (8a, 8b, 8c) intercalé entre des parties de bord supérieur et inférieur du corps de filtre (4) et le corps de bâti (5) pour maintenir l'étanchéité à l'air entre le corps de filtre (4) et le corps de bâti (5) avec une surface de milieu filtrant de 50 à 65 m²/m³ par capacité de filtre unitaire, le filtre à air pour haute température (1) comprenant :
une paire de plaques de support en forme de peigne (9) prenant en sandwich le corps de filtre (4) horizontalement à partir des côtés en amont/en aval d'écoulement d'air au niveau de chaque partie de bord supérieur/inférieur du corps de filtre (4),
**caractérisé en ce que** :
plusieurs paires de plaques d'espacement en forme de peigne (7) prennent en sandwich le corps de filtre (4) horizontalement à partir des côtés en amont/en aval d'écoulement d'air entre les plaques de support en forme de peigne supérieure et inférieure (9) à des intervalles de 90 à 120 mm, et
des espaces fermés indépendants sont formés entre les plaques d'espacement en forme de peigne (7) ainsi qu'entre la plaque de support en forme de peigne (9) et la plaque d'espacement en forme de peigne (7).

2. Filtre à air pour haute température (1) selon la revendication 1, dans lequel les fibres de verre comprennent des fibres de verre ayant un diamètre de fibre moyen de 0,6 à 0,8 µm.

3. Filtre à air pour haute température (1) selon la revendication 1 ou 2,
dans lequel le milieu filtrant (2) est formé par une feuille formée ayant une épaisseur de 7,5 à 10,5 mm et un poids de 75 à 84 g/m².

4. Filtre à air pour haute température (1) selon l'une quelconque des revendications 1 à 3,
dans lequel le milieu filtrant (2) est formé en empilant plusieurs feuilles formées.
